(19) Europäisches Patentamt

European Patent Office

Office européen des brevets

(11) **EP 1 258 289 A2**

(12) **EUROPEAN PATENT APPLICATION**

(43) Date of publication:
    **20.11.2002 Bulletin 2002/47**

(51) Int Cl.⁷: **B01J 19/18**, B01F 7/16,
    B01F 7/18, B01F 15/00

(21) Application number: **02010243.0**

(22) Date of filing: **16.05.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **17.05.2001  JP  2001148188**<br>**26.03.2002  JP  2002086224**<br><br>(71) Applicant: **Shinko Pantec Co., Ltd.**<br>**Kobe-shi, Hyogo 651-0072 (JP)** | (72) Inventors:<br>• **Miyata, Tadaaki**<br>**Amagasaki-shi, Hyogo (JP)**<br>• **Tokuoka, Hiroyuki**<br>**Suma-ku, Kobe-shi, Hyogo (JP)**<br>• **Nakamura, Takahiko**<br>**Kakogawa-shi, Hyogo (JP)**<br><br>(74) Representative:<br>**Reinhard - Skuhra - Weise & Partner**<br>**Friedrichstrasse 31**<br>**80801 München (DE)** |

(54) **Agitating impeller, agitator using the same, and agitating method**

(57)     An agitating impeller includes an agitation shaft and a blade section including a plurality of blade-forming sections mounted to the agitation shaft. The blade-forming sections are each formed of a planar member. An outer end portion of each of the blade-forming sections is bent backward with respect to the direction of rotation of the agitating impeller. A lower end portion of each of the blade-forming sections is formed to conform to the shape of a bottom wall of an agitating vessel in which the agitating impeller is provided. All angular portions of the individual blade-forming sections are chamfered, and agitation shaft and the blade section are glass-lined.

F I G . 1

EP 1 258 289 A2

**Description**

BACKGROUND OF THE INVENTION

1. Field of the Invention

The present invention relates to an agitating impeller and an agitator using the agitating impeller. Specifically, the present invention relates to an agitating impeller and an agitator that are capable of efficiently agitating a small/ large volume of a substance (hereinafter merely referred to "substance") and that are used to agitate various substances, such as electronic materials, medicinal and agricultural chemicals, foodstuffs, polymers, fine chemicals, for which high corrosion resistance and high product purity are required.

In addition, the present invention relates to an agitator and an agitating method to enable efficient implementation of agitation processes, such as mixing, dissolution, crystallization, reaction, slurry suspension, and vapor-liquid contact, for all liquid volumes ranging from a small volume to a large volume, under agitation conditions in phases from a turbulent-flow range to a laminar-flow range.

More specifically, the agitating impeller and the agitator of the present invention can be applied to production steps including steps of liquefying raw granular materials for various product as mentioned above. The aforementioned "foodstuffs" includes general foodstuffs and drinkstuffs, such as alcoholic beverages and foods.

The aforementioned "polymers" field refer to a field of, for example, using or producing various material such as polymeric latex, vinyl chloride resin, emulsion, water-absorbent resin, and polymeric toner. The "polymeric latex" is used for a paper-coating binder, fiber-connecting binder, adhesives, various plastic materials, coating materials, building materials, rubber and components. The "vinyl chloride" is used for, for example, chipping-resistant coatings, sealants, and gloves. Particularly, the present invention is applied to pasting vinyl chloride. The "water-absorbent resin" refers to resin that can generally be obtained through polymerization of a water-soluble ethylene unsaturated monomer.

The "polymerization" in the present invention includes, all the types of reaction, such as emulsion polymerization and suspension polymerization, for creating polymeric compositions from a monomer.

Furthermore, the present invention relates to an agitating impeller, agitator, an agitating method that are used for, for example, crystallization reaction such as cooling crystallization and heating crystallization, oxidation such as surface gas absorption and recycle gas absorption, and chlorination, hydrogenation reaction, a catalyst-adjusting vessel, and a dissolving vessel in the fields of, for example, medicinal and agricultural chemicals, foodstuffs, polymers, and fine chemicals.

2. Related Art

Conventionally, high-purity products are required in the fields of electronic materials, medicinal and agricultural chemicals, foodstuffs, polymers, and fine chemicals. As such, the high sanitary property is importantly required so that an agitating impeller is required to be free of contamination due to adhesion of a substance thereto, and is required to be easily cleaned. In addition, in the aforementioned fields, since corrosive liquid is frequently agitated, the agitator is required to include, for example, an agitating impeller having a high corrosion resistance.

Under these circumstances, in the aforementioned field, for example, a glass-lined agitating impeller is generally used to satisfy the aforementioned requirements (for the sanitary property and the corrosion resistance). Glass-lining is performed such that glass is coated on a metal surface used as a base material, and then heated. This processing forms a glass-lined layer on the metal surface. A product thus glass-lined, such as the aforementioned agitating impeller, is imparted a high sanitary property and a high corrosion resistance.

In the aforementioned fields, generally, an agitator including a single agitating vessel is used to produce products of various types. The agitating vessel is used not only in a case where a standard amount of materials is agitated, but also in other cases depending on, for example, the purpose and the product type. For example, a case can occur in which a substance in a large volume (maximally about 110% of the agitating-vessel capacity) needs to be agitated. Alternatively, a case can occur in which a substance in a very small volume needs to be agitated. Recently, manufacturers engaged in many-type/small-volume production have increased, increasing the frequency of using agitators for agitating a substance in a small volume.

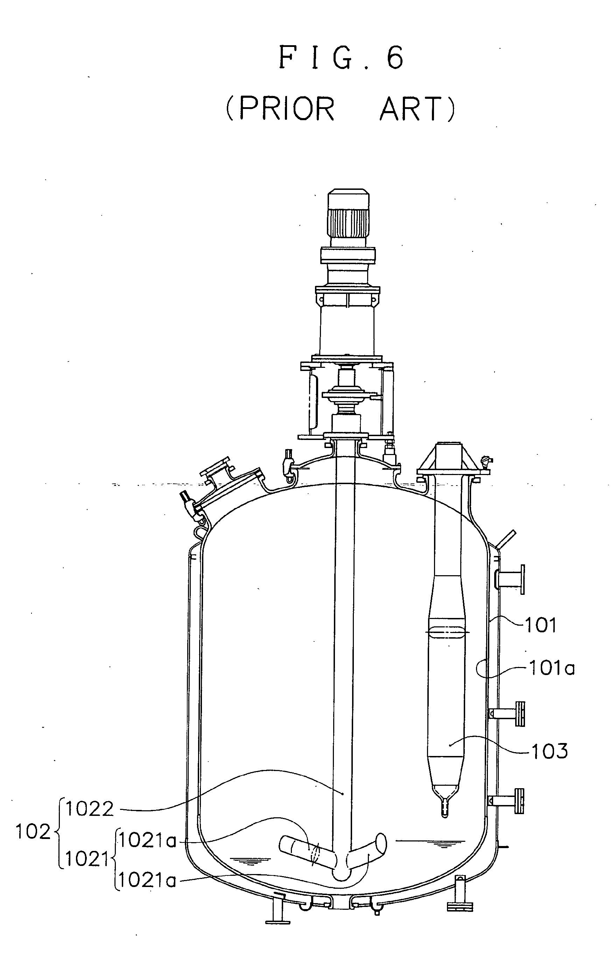

In view of the above, for example, an agitator as shown in Fig. 6 is conventionally used in the aforementioned fields.

Fig. 6 is a schematic view of the agitator according to the conventional art. As shown in this Figure, the agitator is configured using members including an agitating vessel 101, an agitating impeller 102 that is rotationally driven in the agitating vessel 101, and a baffle section 103 that is fixedly provided in the agitating vessel 101. More specifically, the agitating impeller 102 is configured using members including a blade section 1021 formed of three blade-forming sections 1021a, and an agitation shaft 1022 for rotationally driving the blade section 1021.

In the agitator of the conventional art, an inner surface 101a of the agitating vessel 101, the surface of the agitating impeller 102, and the surface of the baffle section 103 are glass-lined.

When a base material to be glass-lined has an angular portion, a glass-lined layer tends to separate from the angular portion, thereby causing the metal to corrode starting with the separated portion. For this reason, for example, the agitating impeller 102 to be glass-lined is fabricated in the shape with minimized angular portions. More specifically, the blade-forming sections 1021a, forming the agitating impeller 102, are each formed such that a pipe cut to have a predetermined length is pressed to substantially be elliptical. The base material thus shaped has no angular portion, so that the material can be appropriately glass-lined.

In the thus-configured agitator of the conventional art, a substance is entered into the agitating vessel 101, and the agitating impeller 102 is then rotationally driven. During the operation, the rotation of the substance is baffled by the baffle section 103, and the substance is thereby agitated and mixed. As described above, the all portions contacting the substance are glass-lined so that the agitator having a high sanitary property and a high corrosion resistance can be achieved.

As described above, in the prior agitator, the blade section 1021, which constitutes the agitating impeller 102, is provided so as to be rotationally driven in a bottom portion of the agitating vessel 101, while the baffle section 103 is provided in an upper portion without interference with the blade section 1021. Accordingly, a lower portion of the baffle section 103 is not immersed in the substance. As such, during agitation of a small volume of a substance, the baffle section 103 does not contribute to the agitation effects, and only a rotational drive force of the agitating impeller 102 (specifically, the blade section 1021 constituting the agitating impeller 102) contributes thereto. On the other hand, however, during agitation of a large volume of a substance, the baffle section 103 is immersed in the substance, and hence, both the agitating impeller 102 and the baffle section 103 contribute to the agitation. That is, the agitator of the conventional art may cause a problem in agitation of a small volume of a substance when the agitation performance of the agitating impeller 102 is low.

The above-described conventional art arises other problems. The pipe is used to form the blade-forming sections 1021a so that, for example, glass-lining is facilitated. In this case, however, in small-volume agitation (agitation of a substance of which the volume is ranged from several % to several tens % of the capacity of the agitating vessel 101), the liquid surface of the substance is positioned near a bottom portion of the agitating vessel 101, thereby making it difficult to obtain a high agitation performance.

More specifically, according to the conventional art, the blade-forming sections 1021a are each formed by, for example, bending a pipe. In this case, the configuration of the agitating impeller 102 limits setting of the blade-forming sections 1021a to be near the bottom wall of the agitating vessel 101. That is, the blade-forming sections 1021a needs to be set with a large clearance between a lower end portion thereof and the bottom wall of the agitating vessel 101. As such, a small volume of a substance needs to be agitated with a small area where the blade-forming sections 1021a are immersed in the substance. This causes a dead space where the substance remains unagitated, thereby disabling sufficient agitation.

Moreover, according to the conventional art, problems occur in that agitation is performed at high shear (high force), thereby causing fine coagulum in emulsion polymerization as well as fine grains in suspension polymerization.

SUMMARY OF THE INVENTION

The present invention is made to solve the above-described problems. An object of the present invention is therefore to provide an agitating impeller and an agitator that have a high sanitary property and a high corrosion resistance and that are capable of exhibiting high agitation performance as a matter of course in agitating a large volume of a substance (maximally equivalent to about 110% of the capacity of the agitating vessel) as well as in agitating a small volume of a substance (equivalent to a range of several % to several tens % of the capacity of the agitating vessel).

Another object of the present invention is to provide an agitating impeller and an agitator that are capable of suppressing occurrence of fine coagulum in emulsion polymerization and occurrence of fine grains in suspension polymerization.

According to an aspect of the present invention, an agitating impeller includes an agitation shaft, and a blade section including a plurality of blade-forming sections mounted to the agitation shaft. The blade-forming sections are each formed of a planar member, an outer end portion of each of the blade-forming sections is bent backward with respect to the direction of rotation of the agitating impeller, and a lower end portion of each of the blade-forming sections is formed to conform to the shape of a bottom wall of an agitating vessel in which the agitating impeller is provided.

In addition, as an additional feature, all angular portions of the individual blade-forming sections are chamfered to glass-lines the agitation shaft and the blade section. That is, angular portions of abutting surfaces are rounded.

According to the agitating impeller thus configured, since the lower end portion of each of the blade-forming sections is provided to conform to the shape of the bottom wall of the agitating vessel, the agitating impeller can be disposed closer to the bottom wall of the agitating vessel in comparison to the conventional case. As such, occurrence of residues of a substance on the bottom wall of the agitating vessel can be effectively prevented. In addition, the agitating impeller is formed of the planar member. In this case, in comparison to the conventional configuration using the pipe, the agitating impeller can easily be formed with a sufficient height. Thereby, the agitation performance during large-volume agitation can be improved. Moreover, since the agitating impeller is glass-lined, it can be imparted with a high sanitary property as well as a high corrosion resistance. In this case, all angular portions of each of the blade-forming sections are chamfered. This provides an advantage in that a glass-lined layer is imparted with a high resistance against separation.

When the agitating impeller is to be glass-lined to improve the sanitary property and the corrosion resistance, the agitating impeller is preferably configured such that an impeller-mounting opening is provided to an upper wall of the agitating vessel; an inner diameter D of the agitating vessel and a bore T of the impeller-mounting opening have a relationship satisfying an equation expressed as

$$T = 0.3D \text{ to } 0.4D;$$

and
the agitating impeller can be mounted by insertion into the agitating vessel through the impeller-mounting opening.

The agitating impeller according to the above-described aspect of the present invention is preferably configured such that a span d and a height h of the blade section have a relationship satisfying an equation expressed as

$$h/d \geq 0.25.$$

More preferably, the span d and the height h of the blade section have a relationship satisfying an equation expressed as

$$h/d = 0.25 \text{ to } 0.75.$$

The above-described configuration may be used when the agitating impeller is not glass-lined.

In addition, to achieve the aforementioned objects (and to solve the problems with the above-described conventional art), the present invention provides an agitator including an agitating vessel in a vertical cylindrical shape, an agitating impeller provided in the agitating vessel to be rotationally driven, and a baffle section fixedly disposed in the agitating vessel. The baffle section is provided above the agitating impeller such that a lower end portion of the baffle section and an upper end portion of the agitating impeller do not overlap with each other in a vertical direction in the agitating vessel; and a lower end portion of the agitating impeller is formed to conform to the shape of a bottom wall of the agitating vessel.

According to the agitator thus configured, since the lower end portion of each of the blade-forming sections is provided to conform to the shape of the bottom wall of the agitating vessel, the agitating impeller can be disposed closer to the bottom wall of the agitating vessel in comparison to the conventional case. As such, occurrence of residues of a substance on the bottom wall of the agitating vessel can be effectively prevented. In addition, the agitator includes the agitating impeller thus disposed closer to the bottom wall and the baffle section provided above the agitating impeller. As such, small-volume agitation is appropriately implemented through the rotationally driven agitating impeller. Moreover, also large-volume agitation is implemented through an effectively functioned rotational operation of the agitating impeller and effectively functioned a shielding operation of the baffle section against the substance.

In addition, the agitator can be imparted with a high sanitary property and a high corrosion resistance when the inside of the agitating vessel and the internal configuration elements (such as the agitating impeller and the baffle section) are glass-lined.

Preferably, the agitator has a configuration including an agitation shaft with which the agitating impeller rotationally driven by a driving section provided outside of the agitating vessel, and a blade section including a plurality of blade-forming sections mounted to the agitation shaft. The blade-forming sections are each formed of a planar member, an outer end portion of each of the blade-forming sections is bent backward with respect to the direction of rotation of the agitating impeller, and a lower end portion of each of the blade-forming sections is formed to conform to the shape of a bottom wall of the agitating vessel. In this case, to perform glass-lining, the configuration is preferably arranged such that all angular portions of each of the blade-forming sections are preferably chamfered.

According to the preferable configuration, since the lower end portion of each of the blade-forming sections is formed to conform to the shape of the bottom wall of the agitating vessel, the agitating impeller can be disposed closer to the bottom wall of the agitating vessel in comparison to the conventional case. In addition, the agitating impeller is formed of the planar member. In this case, in comparison to the conventional configuration using the pipe, the agitating impeller can easily be formed with a sufficient height. Thereby, the agitation performance during large-volume agitation can be improved. Moreover, with a configuration in which all angular portions of each of the blade-forming sections are chamfered, an advantage can be obtained in which a glass-lined layer is imparted with a high resistance against separation.

In the above, in a case where the agitating impeller is to be glass-lined, the agitator is preferably configured such that an impeller-mounting opening is provided to an upper wall of the agitating vessel. In addition, an inner diameter D of the agitating vessel and a bore T of the impeller-mounting opening have a relationship satisfying an equation expressed as

$$T = 0.3D \text{ to } 0.4D;$$

and
the agitating impeller can be mounted by insertion into the agitating vessel through the impeller-mounting opening.

The above-described agitator according to the present invention is preferably configured such that a ratio (h/d) between a span d and a height h of the blade section is 0.25 or higher. More preferably, the span d and the height h of the blade section have a relationship satisfying an equation expressed as

$$h/d = 0.25 \text{ to } 0.75.$$

The above-described configuration may be used when the agitating impeller is not glass-lined.

Furthermore, to achieve the aforementioned objects (and to solve the problems with the above-described conventional art), according to another aspect of the present invention, an agitator includes an agitating vessel in a vertical cylindrical shape, an agitating impeller provided in the agitating vessel to be rotationally driven, and a baffle section fixedly disposed in the agitating vessel. The baffle section is provided above the agitating impeller such that a lower end portion of the baffle section and an upper end portion of the agitating impeller do not overlap with each other in a vertical direction in the agitating vessel; the agitating impeller is formed to include an agitation shaft with which the agitating impeller rotationally driven by an driving section provided outside of the agitating vessel, and a blade section including a plurality of blade-forming sections mounted to the agitation shaft; the blade-forming sections are each formed of a planar member; an outer end portion of each of the blade-forming sections is bent backward with respect to the direction of rotation of the agitating impeller; and a lower end portion of each of the blade-forming sections is formed to conform to the shape of a bottom wall of the agitating vessel. In a case where glass-lining is to be performed, all angular portions of the individual blade-forming sections are chamfered; and an inner surface of the agitating vessel, an outer surface of the agitating impeller, and an outer surface of the baffle section are glass-lined. In addition, it is preferable that the agitating impeller can be mounted by insertion into the agitating vessel through the impeller-mounting opening; and an inner diameter D of the agitating vessel, a bore T of the impeller-mounting opening, a span d of the blade section, and a height h of the blade section have relationships satisfying equations expressed as

$$T = 0.3D \text{ to } 0.4D,$$

$$d = 0.4D \text{ to } 0.67D,$$

and

$$h/d \geq 0.25.$$

In the agitator according to the above-described aspect of the present invention, it is preferable that the bore T of the impeller-mounting opening and the span d of the blade section have a relationship satisfying an equation expressed as

$$d = 1.4T \text{ to } 1.6T.$$

In this case, the agitator can be configured to include the agitating impeller having a high insertability as well as a high agitation performance. Consequently, both the high assemblability and high agitation performance can coexist according to the present invention.

Furthermore, with a configuration using one of the agitating impellers configured as described above or one of the agitating vessels configured as described above, agitation can be implemented for a substance in a volume-varying state such that the substance in an arbitrary volume in a range of from about 3% to about 110% of the capacity of the agitating vessel is agitated, and the substance is increased or reduced in volume within the range during the agitation.

BRIEF DESCRIPTION OF THE DRAWINGS

The above, and other objects, features and advantages of the present invention will become apparent from the detailed description thereof in conjunction with the accompanying drawings wherein.

Fig. 1 is a schematic view of an agitator of an embodiment according to the present invention.

Fig. 2 consisting of Figs. 2(a) and 2(b) shows an agitating impeller of the embodiment according to the present invention, wherein Fig. 2(a) is a schematic side view thereof, and Fig. 2(b) is a view taken along the line II-II in Fig. 2(a).

Fig. 3 consisting of Figs. 3(a) to 3(c) schematically shows three representative agitating impellers used to investigate relationships between, for example, dimensions of portions of the agitating impellers mountable through an impeller-mounting opening and the agitation performance and the like, wherein Fig. 3(a) shows an agitating impeller in which a height h of a blade section is great, Fig. 3(b) shows an agitating impeller in which a span d of a blade section is large, and Fig. 3(c) shows an agitating impeller in which the height h and the span d are each set to an appropriate range.

Fig. 4 is a graph showing the relationship between h/d of the blade section forming the agitating impeller and the agitation performance in a case where agitation is performed using a substance having a high viscosity.

Fig. 5 is a graph showing the relationship between h/d of the blade section forming the agitating impeller and the agitation performance in a case where agitation is performed using a substance having a low viscosity.

Fig. 6 is a schematic view of an agitator of a conventional art.

DESCRIPTION OF THE PREFERRED EMBODIMENT

Hereinbelow, an embodiment of the present invention will be described with reference to the drawings.

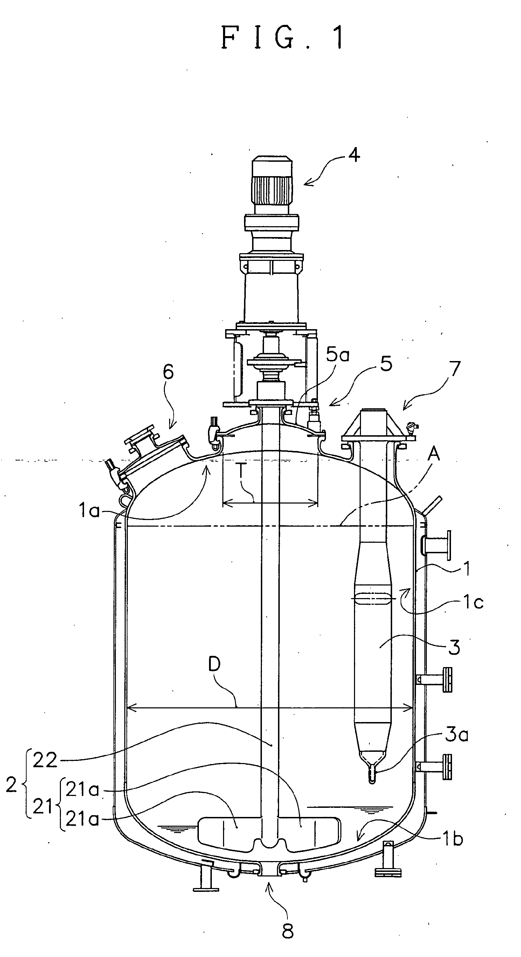

Fig. 1 is a schematic view of an agitator of the embodiment according to the present invention. The agitator is configured using members including an agitating vessel 1 having a vertical cylindrical shape, an agitating impeller 2 provided to be rotatable in the agitating vessel 1, and a baffle section 3 fixedly disposed in a predetermined portion in the agitating vessel 1. The agitating impeller 2 is configured using members including a blade section 21 and an agitation shaft 22. The blade section 21 is formed to include two blade-forming sections 21a. The blade section 21 is mounted to the agitation shaft 22, which is connected to a driving section 4 provided in an upper portion on the outside of the agitating vessel 1, and is thereby rotatably driven.

The agitating vessel 1 has the vertical cylindrical shape, as described above. In an upper wall 1a of the agitating vessel 1 are provided an impeller-mounting opening 5 that is used to mount the agitating impeller 2 in the agitating vessel 1, an entry 6 that is used to feed a substance into the agitating vessel 1, and a baffle-mounting opening 7 that is used to mount the baffle section 3 in the agitating vessel 1. The agitation shaft 22 is provided to extend through a lid portion 5a of the impeller-mounting opening 5, and is connected to the driving section 4 provided thereover.

To a bottom wall 1b of the agitating vessel 1, there is provided an outlet 8 used to discharge, for example, a product produced as a result of agitation of a substance.

In the present specification, the "capacity of an agitating vessel" (or, "agitating-vessel capacity") is defined by the capacity from the bottom of the vessel up to a level shown by a two-dotted chain A in Fig. 1 (line extending through portions where linear portions of a shell portion of the agitating vessel 1 contact a curved line of the upper wall 1a of the agitating vessel 1).

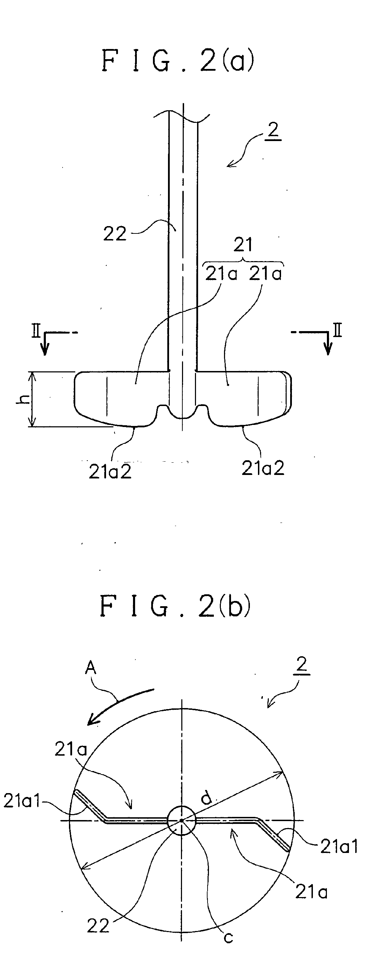

As described above, the agitating impeller 2 is configured using members including the blade section 21 and the agitation shaft 22 to which the blade section 21 is provided. More specifically, the agitating impeller 2 is configured as shown in Fig. 2. Fig. 2 consists of Figs. 2(a) and 2(b), and schematically shows the agitating impeller 2. Fig. 2(a) is a schematic side view thereof, and Fig. 2(b) is a view taken along the line II-II of Fig. 2(a).

Referring to Fig. 2, the blade-forming sections 21a, which form the blade section 21, are formed using a planar member. All angular portions of the planar member are chamfered. Outer end portions 21a1 of the blade-forming sections 21a are each formed to tilt in the rearward direction with respect to a rotational direction A of the agitating impeller 2 (that is, in the reverse direction of A). Lower end portions 21a2 of the individual blade-forming sections 21a are each formed to conform to the shape of the bottom wall 1b of the above-described agitating vessel 1.

In this embodiment, the terminology "blade-section span" (or a synonym such as "span of the blade section" therefor) is used to define a diameter d (refer to Fig. 2(b)) of a circle having a radius extending from a center C of the agitation shaft 22 up to an outer end of the blade-forming sections 21a. In addition, in this embodiment, the terminology "blade-section height" (or a synonym such as "height of the blade section" therefor) is used to define a maximum height h (refer to Fig. 2(a)) of the blade-forming sections 21a along the axial direction (vertical direction in the drawing) of the agitation shaft 22 in a state where the agitating impeller 2 is mounted into the agitating vessel 1.

The baffle section 3 is inserted through the baffle-mounting opening 7, and is mounted to be fixed near an inner sidewall 1c of the agitating vessel 1. When the baffle section 3 is inserted into the agitating vessel 1, the baffle-mounting opening 7 is appropriately sealed using, for example, a gasket. The baffle section 3 is formed overall to be planar (as a beaver tail). A lower end portion 3a of the baffle section 3 is provided in a position not overlapping with the blade section 21 (i.e., in a position without interference with the blade section 21) in the vertical direction. The lower end portion 3a is provided in the above-mentioned manner to prevent an offset load from being exerted on the blade section 21 and the agitation shaft 22 under the influence of the baffle section 3 when the agitating impeller 2 is rotationally driven. Moreover, according to the agitating impeller of this embodiment, since even a small volume of the substance can be agitated at high efficiency, the lower end of the baffle section 3 need not be placed downward to the vicinity of the agitating impeller 2. In other words, the agitation can efficiently be implemented even in a configuration where the lower end portion 3a of the baffle section 3 is not placed down in the position to overlap with the blade section 21.

As described above, the thus-configured agitator is used in the fields of electronic materials, medicinal and agricultural chemicals, foodstuffs, polymers, and fine chemicals, in which a high sanitary property and a high corrosion resistance are required. As such, portions contactable with the substance are glass-lined. The contactable portions include inner surfaces of portions (namely, the upper wall 1a, the bottom wall 1b, and the inner sidewall 1c) of the agitating vessel 1, an outer surface of the agitating impeller 2, and an outer surface of the baffle section. The portions to be glass-lined are formed not to include protrudent portions, angular portions, and the like in order to prevent separation of the glass-lined layer after fabrication.

Separable portions are preferably minimized for the individual configuration elements of the agitator in view of preventing possible intrusion of contamination into products. Specifically, the individual elements are preferably integrally formed by minimizing connected portions for which, for example, flanges, gaskets, and/or bolts are used. With the element having a connected portion, a substance resides in the portion (that is, generally called "liquid residues" are caused). This can reduce the sanitary property, thereby causing contamination.

In consideration of the above, this embodiment uses the agitating vessel 1 of a so-called "closed type" that avoids the use of main-unit flanges.

Types of the configuration of an agitating vessel also include a type of configuration fabricated by connecting a main-unit shell portion (sidewall portion) and an upper wall portion of the agitating vessel with main-unit flanges (the type of this configuration hereinbelow will be referred to as an "open type"). When the open-type agitating vessel is used, configuration elements such as an agitating impeller can be mounted very easily. For example, an even agitating impeller having a large blade section can easily be mounted. With a large blade section being mounted, a high agitation performance can be expected in, for example, a case where a large volume of a substance is agitated. On the other hand, however, the influence of, for example, contamination due to liquid residues is unavoidable, as described above. Specifically, when a substance resides in a clearance between the main-unit shell portion and the upper wall portion, cleaning is not sufficient to completely remove the residues in the clearance, and the residues as contamination may intrude into a product. Recently, cases have increased in which small-volume/many-type agitation is performed to produce high-purity products are demanded. This tendency makes it difficult for users to easily select the open type. As such, users are compelled to use a closed-type agitating vessel, which causes less contamination, with an agitator to obtain high agitation performance thereof.

The same consideration as described above is applied also to the agitating impeller 2. This embodiment uses the agitating impeller 2 in which the blade section 21 and the agitation shaft 22 are integrally configured. Thus, this embodiment uses the agitating impeller 2 with which liquid residues do not occur. In addition, to perform the above-described glass-lining, the blade section 21a is formed not to include protrudent portions. Specifically, all plate edge portions and angular portions are chamfered, and the outer end portion 21a1 is bent with a rounded curve. Thereby, the glass-lining can appropriately be performed for the blade section 21 of this embodiment, thereby imparting a high separation resistance to the formed glass-lined layer.

As described above, a closed-type agitating vessel needs to be used to obtain an agitator capable of providing a high agitation performance while preventing the intrusion of, for example, contamination, into a product. Concurrently, an agitating impeller having as high agitation performance as possible needs to be used with the agitating vessel. To obtain such an agitator, the inventors of the present invention earnestly devised techniques, and have consequently attained ideas regarding a configuration as described below. Hereinbelow, the configuration will be described in detail.

In a configuration using the closed-type agitating vessel 1, the agitating impeller 2 is inserted through the impeller-mounting opening 5 to the upper wall 1a of the agitating vessel 1, and is thereby mounted. To obtain a high-performance agitator, an agitating impeller having as a high agitation performance as possible needs to be selected from agitating impellers insertable through the impeller-mounting opening 5. In addition, an impeller to be selected needs to be suitable to implement appropriate agitation of a small/large volume of a substance.

To configure the agitator as shown in this embodiment, generally used configuration elements are employed. The elements include the entry 6, through which a substance is fed, and the baffle-mounting opening 7. As such, a setting range for a bore T (refer to Fig. 1) of the impeller-mounting opening 5 provided to the upper wall 1a of the agitating vessel 1 is provided as a range without the aforementioned elements such as the entry 6; and generally, it has the relationship expressed by the following equation (Eq. 1) with an inner diameter D (refer to Fig.1) of the agitating vessel 1:

$$T = 0.3D \text{ to } 0.4D \quad\quad\quad (\text{Eq.1})$$

Thus, in this embodiment, the agitating impeller 2 needs to be insertable and mountable through the impeller-mounting opening 5 having the bore T in the range according to the above equation (Eq. 1). Consequently, the bore T imposes a specific limitation on, for example, the size of the agitating impeller 2.

As such, in this embodiment, the inventors paid attention to a span d and a height h of the blade section to appropriately select the agitating impeller 2 that is insertable and mountable through the impeller-mounting opening 5 and that has a high agitation performance.

As described above, since a specific limitation is imposed to the agitating impeller 2 by the bore T of the impeller-mounting opening 5, the span d and the height h of the blade section 21 cannot be unlimitedly increased. In addition, to satisfy the condition that the agitating impeller 2 is insertable through the impeller-mounting opening 5, when the span d of the blade section is determined, a setting range of the height h is thereby determined. Conversely, when the height h is determined, a setting range of the span d is determined, and the span d is thereby determined. That is, the span d and the height h of the blade section 21 are related such that the setting range of the one of them is determined, the setting range of the other one is determined.

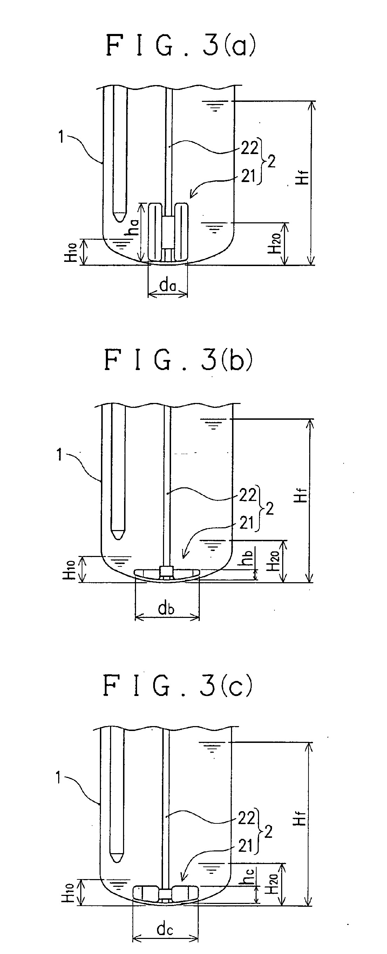

In view of the above, the inventors predetermined a dimensional range for the bore T of the impeller-mounting opening 5, and performed experiments to investigate the relationship with the agitation performance. Thereby, the inventors found appropriate setting ranges of the span d and the height h of the blade section 21. Hereinbelow, the above will be described in detail with reference to Fig. 3.

Figs. 3 schematically show three representative agitating impellers used in the aforementioned experiments. Fig. 3(a) shows an example of the agitating impeller 2 in which a height $h_a$ of a blade section 21 is determined to be great, and a span $d_a$ is determined so as to enable the insertion of the agitating impeller 2 including the blade section 21 with the height $h_a$ (the aforementioned agitating impeller hereinbelow will be referred to as a "first agitating impeller") through the impeller-mounting opening 5. Fig. 3(b) shows an example of the agitating impeller 2 in which a span $d_b$ of a blade section 21 is determined large, and a height $h_b$ is determined so as to enable the insertion of the agitating impeller 2 including the blade section 21 with the span $d_b$ (the aforementioned agitating impeller hereinbelow will be referred to as a "second agitating impeller") through the impeller-mounting opening 5. Fig. 3(c) shows an example of the blade section 21 (having a span $d_c$ and a height $h_c$) of an impeller exhibited a relatively high agitation performance among agitating impellers insertable through the impeller-mounting opening, in each of which the height of the blade section 21 was changed in a range from the height $h_a$ shown in Fig. 3(a) to the height $h_b$ shown in Fig. 3(b), as well as the span of the blade section 21 was changed in a range from the span $d_a$ shown in Fig. 3(a) to the span $d_b$ shown in Fig. 3(b) (the aforementioned agitating impeller hereinbelow will be referred to as a "third agitating impeller"). The blade section 21 each shown in Figs. 1 and 2 is the same as the blade section 21 shown in Fig. 3(c).

In this embodiment, using the individual agitating impellers 2 shown in Figs. 3 were compared for agitation performances for three volumes (Hf: agitatable FULL volume; $H_{20}$: 20% volume of the FULL volume Hf; and $H_{10}$: 10% volume of the FULL volume Hf). As a substance, glutinous starch syrup having a viscosity of about $500 \times 10^{-3} \text{N} \cdot \text{S/m}^2$ (= 500 cp) was used. The FULL volume represents 100% of the capacity of the agitating vessel.

Table 1 shown below summarizes practical data of the blade section 21 forming the agitating impellers 2 and times required for agitating the individual volumes of the substance (that is, agitation performances). In this case, the inner diameter D of the agitating vessel 1 is 400 mm, and the bore T of the impeller-mounting opening 5 is 135 mm.

Table 1

| | (a) d=0.32D=128mm h=1.4d=180mm | (b) d=0.55D=220mm h=0.136d=30mm | (c) d=0.5D=200mm h=0.25d=50mm |
|---|---|---|---|
| FULL(100%) | 80sec | 50sec | 50sec |
| 20% | 30sec | 80sec | 80sec |
| 10% | Muscle-like dead space exists even after 5 minutes has passed | Muscle-like dead space exists even after 5 minutes has passed | 40sec |

As shown in Table 1, for the FULL volume $H_f$ of the substance, times required to complete the agitation were 80 seconds with the first agitating impeller being used, 50 seconds with the second agitating impeller being used, and 50 seconds with the third agitating impeller being used. These results show that, with the agitating impeller 2 satisfying the prerequisite condition therefor to be insertable through the impeller-mounting opening 5, when performing agitation of a large volume of the substance fed into the agitating vessel 1, the span of the blade section 21 forming the agitating impeller 2 influences agitation performance greater than the height of the blade section 21 does. That is, the results show that agitation performance is improved proportionally to the length of the span of the blade section 21. Specifically, in terms of the relationship with the inner diameter D of the agitating vessel 1, the span d of the blade section 21 is preferably set within a range expressed as d = 0.4D to 0.67D.

For the 20% volume $H_{20}$, times required to complete the agitation were 30 seconds with the first agitating impeller being used, 80 seconds with the second agitating impeller being used, and 80 seconds with the third agitating impeller being used. For the 10% volume $H_{10}$, the substance was completely agitated in 40 seconds only when the third agitating impeller was used. When either of the first and second agitating impellers was used, agitation was not completed even after 5 minutes passed after the start of agitation. In this case, at least one muscle-like portion (unagitated portion) remained in the substance during agitation.

The muscle-like portion is considered to have occurred for the reason that because of imbalance between the span and the height of the blade section 21 forming the agitating impeller 2 in the agitating vessel 1, a dead space occurred in a circulating flow with residues of the substance.

As described above, the results of the experiments teach that the first agitating impeller exhibits the highest agitation performance for agitating the 20% volume $H_{20}$. Nevertheless, the first agitating impeller arises problems. Specifically, the first agitating impeller includes the blade section 21 of which an upper portion is positioned higher than the liquid surface of the substance. As such, the substance scatters, and adheres onto the inner sidewall 1c of the agitating vessel 1. The scattered agitation-object substance can solidify and deteriorate to cause contamination. Moreover, in the agitation performed for the 10% volume $H_{10}$ by using the first agitating impeller, the muscle-like portion occurs, thereby making it difficult to implement appropriate agitation.

The second agitating impeller is capable of exhibiting the agitation performance (80 seconds), which is equivalent to the performance of the third agitating impeller, during the agitation of the 20% volume $H_{20}$. However, similar to the first agitating impeller, also the second agitating impeller causes the problem of occurring the muscle-like portion, thereby making it difficult to implement appropriate agitation.

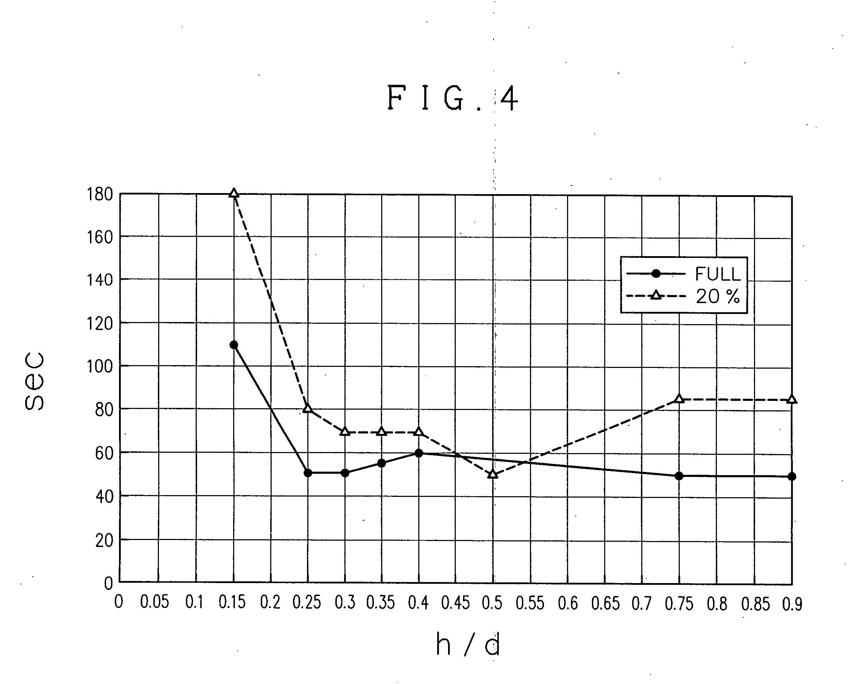

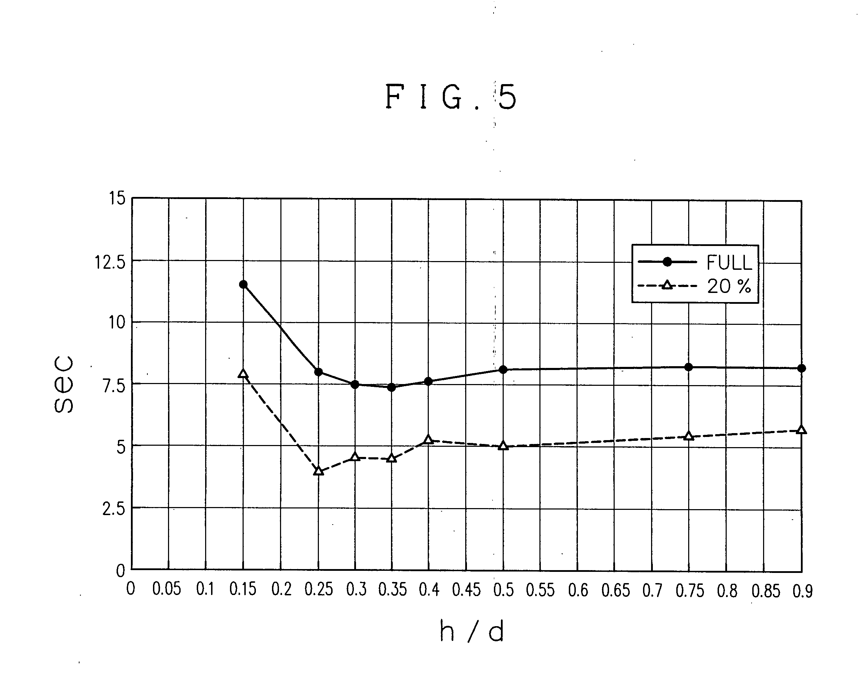

From the above-described results of the experiments, the inventors obtained knowledges that an agitating impeller 2 having an appropriate agitation performance cannot be obtained even with a blade section 21 having a maximized span d and a blade section 21 having a maximized height h. In addition, the inventors learned that appropriate setting ranges exist between the span d and the height h. With these knowledges, the inventors carried out experiments to investigate the agitation performance (agitation time) by using ratios between spans d and heights h (h/d) as parameters. Detailed experiment results are shown in Figs. 4 and 5. Fig. 4 shows the result of the experiment performed by feeding glutinous starch syrup (as a substance) having a viscosity of $500 \times 10^{-3}N \cdot S/m^2$ (= 500 cp). Similarly, Fig. 5 shows the result of the experiment performed by feeding water having a viscosity of $1 \times 10^{-3}N \cdot S/m^2$ (= 1 cp).

In each graph shown in Figs. 4 and 5, the horizontal axis represents the ratio (h/d) between the span d and the height h that form the blade section 21, and the vertical axis represents the time (seconds) until completion of agitation performed using the blade section 21. As is apparent in Figs. 4 and 5, it is determined that the shorter the time until completion of the agitation, the higher the agitation performance.

In Fig. 4, a graph shown by a solid line connecting ● marks represents the result of an example of agitation performed by feeding a FULL volume (100% of the agitating-vessel capacity (which is the same also in Fig. 5)) of the substance (glutinous starch syrup) into the agitating vessel 1. Similarly, in Fig. 4, a graph shown by a dotted line connecting △ marks represents the result of an example of agitation performed by feeding a 20% volume of the FULL volume of a substance (glutinous starch syrup) into the agitating vessel 1. In Fig. 5, a graph shown by a solid line connecting ● marks represents the result of an example of agitation performed by feeding a FULL volume of a substance (water) into the agitating vessel 1. Similarly, in Fig. 5, a graph shown by a dotted line connecting △ marks represents the result of an example of agitation performed by feeding a 20% volume of the FULL volume of the substance (water) into the agitating vessel 1.

Fig. 4 shows that when h/d is set lower than 0.25, the agitation performance significantly decreases either in the agitation of FULL volume (●) or in the agitation of the 20% volume (△). In addition, Fig. 4 shows that when h/d is set higher than 0.75, the agitation performance decreases.

In the agitation of the FULL volume (●), even when h/d is higher than or equal to 0.75, the agitation performance is relatively high. However, when the height h of the blade section 21 is excessively great, an upper portion of the blade section 21 appears in such a manner as to protrude from the liquid surface of the substance in small-volume agitation. This can cause liquid-scattering (scattering of the substance), thereby causing the contamination as described above.

Fig. 5 shows results similar to those shown in Fig. 4. That is, also in the case shown in Fig. 5, in which the agitation performed by feeding the substance having the different viscosity ($1 \times 10^{-3}$N $\cdot$S/m$^2$) from the viscosity ($500 \times 10^{-3}$N $\cdot$ S/m$^2$) fed in the case shown in Fig. 4, when h/d is set lower than 0.25, the agitation performance decreases in agitation of either of the volumes. Also, when h/d is set higher than 0.75, the agitation performance decreases in agitation of either of the volumes.

As is apparent from Figs. 4 and 5, even when the substance having the different viscosity is fed, substantially the same appropriate h/d setting range exists to prevent contamination occurable due to scattering and the like while obtaining a high agitation performance. Specifically, when h/d has the relationship expressed by an equation shown below, an agitating impeller 2 can be obtained that satisfies the requirements for, for example, the aforementioned prevention of the contamination and that has a high agitation performance.

$$h/d \geq 0.25 \qquad\qquad\qquad \text{(Eq.2)}$$

In addition, it can be known from Figs. 4 and 5 that h/d has, preferably, the relationship expressed by the following equation:

$$h/d = 0.25 \text{ to } 0.75 \qquad\qquad\qquad \text{(Eq.3)}$$

Moreover, it can be known from Figs. 4 and 5 that h/d is more preferably set to a range of from 0.25 to 0.5.

In a configuration using an agitating impeller 2 including a blade section 21 of which h/d is set one of the aforementioned setting ranges (satisfying one of the equations (Eq. 2) and (Eq. 3)), problems such as protrudent appearance of a large portion of the blade section 21 from the liquid surface do not occur even in small-volume agitation. As such, contamination can be prevented from occurring due to, for example, scattering of the substance. In addition, as shown in Figs. 4 and 5, the above-described agitating impeller 2 is capable of exhibiting high performance in a wide volume range.

In addition, this embodiment is preferably configured to have the relationship of d = 1.4T to 1.6T between the bore T of the impeller-mounting opening 5 and the span d of the blade section 21. In a configuration having relationships such as the above-described relationship of h/d and the aforementioned relationship between the bore T of the impeller-mounting opening 5 and the span d of the blade section 21, the agitating impeller can be configured to be inserted even more easily and to have a higher agitation performance. Use of thus-configured agitating impeller enables the provision of an agitator having both high assemblability and high agitation performance being compromised with each other.

Hereinbelow, a method of using the agitator configured as described above will be described.

According to this embodiment, the agitator is configured to include the agitating impeller 2 in the agitating vessel 1, in which the agitating impeller 2 includes the blade section 21 configured to be within the setting range expressed by one of the equations (Eq. 2) and (Eq. 3) discussed above. As is apparent from Table 1 and Figs. 4 and 5, the agitator of this embodiment exhibits a high performance in the agitation of a substance in a wide volume range of from a small volume (several % of the FULL volume) to a large volume (FULL volume). In this embodiment, while the agitatable FULL volume is defined to be 100% of the agitating-vessel capacity as a maximum value representing the maximum agitatable volume, the maximum value can be increased up to about 110%. Accordingly, the thus-configured agitator (as shown in Fig. 1) is imparted with capability of efficiently implementing both the small-volume agitation and the large-volume (such as the FULL volume) agitation by using the same agitating impeller. As such, the agitator can be used without changing the agitating impeller for various agitation volumes.

In this embodiment of the present invention, a lower limit of the small volume may be set to about 3% or higher. With a volume fewer than the volume corresponding to the lower limit of 3%, the volume is excessively small. In this case, the vicinity of the lower end portion of the agitating impeller is not immersed sufficiently in the substance. This condition makes it difficult to implement sufficient agitation.

An upper limit of the large volume may be set to about 110% of the agitating-vessel capacity. With a volume greater than the volume corresponding to the upper limit of 110%, the substance during agitation tends to adhere to members such as the impeller-mounting opening 5 and the baffle-mounting opening 7 that are provided in the upper wall 1a of the agitating vessel 1. This increases the probability of causing contamination. In addition, with a substance exceeding the upper limit of 110% in volume, the liquid surface of the substance reaches above the level of a jacket (provided to circulate the fluid for heating/cooling purposes) of the agitator. Consequently, the volume exceeding the upper limit results in reducing the heating/cooling efficiency.

As a matter of course, this embodiment usable for the wide range of volumes exhibits a high agitation performance in a generally known agitating method in a volume-varying state. This method is carried out such that a substance of an arbitrary volume range of from a small volume (about 3% or higher) to a large volume (about 110% or lower) is fed into the agitator, and the volume of the substance is increased or reduced during agitation.

As described above, this embodiment is capable of agitating a substance in the volume-varying state within the aforementioned range (about 3% to about 110%). As such, as described below, this embodiment offers advantages in, for example, a discharge operation of a granule dispersion process, and a concentrating process.

An event can occur in which agitation is performed in a state where granules are fed into a substance, and the granules need to be equally dispersed in the substance. In this event, when the rotation of the agitating impeller is stopped, the granules that have been dispersed by the agitation unexpectedly sink or float by gravity or buoyancy, thereby reducing the dispersion degree. To prevent this phenomenon, processing needs to be performed such that the agitating impeller is rotated even when discharging the substance after the uniform granule dispersion, and the solution is drained while continuing agitation (that is, while maintaining the state where the granules are uniformly dispersed). According to this embodiment, however, the discharge process can be implemented while agitating the volume in the range to about 3% of the agitating-vessel capacity. This enables the production of the solution having a high uniform-dispersibility until the volume thereof is reduced fewer than in the conventional-art case (about 10%).

Generally, in a solution-concentrating process, the volume of liquid decreases through evaporation as the time passes. As described, however, according to this embodiment, the configuration has a high agitation performance even in agitating a small volume (about 3%), even when the volume is reduced by the concentration, the concentrating process can be implemented at high agitation efficiency.

In practical agitation, a substance is fed into the agitating vessel 1 through the entry 6, and the lid portion of the entry 6 and the like are sealed. Thereafter, the driving section 4 is driven, and the blade section 21 is thereby driven to rotate through the agitation shaft 22. Then, the agitating impeller 2 is rotationally driven for a predetermined time to agitate the substance. A product obtained through the above-described operations is then discharged through the outlet 8 provided to the bottom wall 1b of the agitating vessel 1.

Depending on the necessity, the outlet 8 may be provided with an external flush valve (not shown). In this case, the external flush valve is of a type that is moved upward and when a product is discharged through the outlet 8 and that is then pushed up to the inside of the agitating vessel 1.

When this valve is used in the configuration of the conventional art, the lower end of the agitation shaft needs to be positioned upward so that the agitation shaft and the valve do not interfere with each other. Consequently, in the configuration of the conventional art, also the blade section needs to be positioned apart from the bottom wall of the agitating vessel, thereby causing the configuration to be unsuitable for small-volume agitation. More specifically, in the configuration of the conventional art, when the inner diameter of the vessel is represented by D, a clearance of at least 0.07D needs to be provided between the lower end portion of the blade section and the bottom wall of the agitating vessel.

In this embodiment, configurations are made to be effective with the external flush valve. The agitating impeller 2 is configured such that a central portion (end portion of the agitation shaft 22) positioned above the outlet 8 is positioned apart as far as possible from the outlet 8. Moreover, as described above, the blade section 21 is shaped to conform to the shape of the bottom wall 1b of the agitating vessel 1. The clearance between the lower end portion 21a2 of the blade section 21 and the bottom wall 1b is set to about 0.04D with respect to the inner diameter D of the agitating vessel 1. Preferably, the aforementioned clearance is set to a range of from 0.03D to 0.06D.

Thus, according to this embodiment, while the lower end portion of the agitation shaft 22 is spaced apart from the bottom wall 1b, the lower end portion 21a2 of the blade section 21 is shaped to conform to the shape of the bottom wall 1b. As such, in comparison to the conventional-art configuration, the agitating impeller 2 can be provided closer to the bottom wall 1b. This arrangement enables the agitating impeller 2 and the agitator to be suitable for implementing the small-volume agitation.

As described above, the agitator of this embodiment is configured such that the agitating impeller 2 having high agitation performance is selected through the various experiments and the like, and the agitating impeller 2 is provided in the closed-type agitating vessel 1. Consequently, the agitator enables various advantages as described below to be obtained.

In comparison to the agitating impeller (refer to Fig. 6) constituting the agitator of the conventional art, the agitating impeller of this embodiment is constituted of the blade section formed to have the significantly great height h. Moreover, in this embodiment, the lower end portion 21a2 of the agitating impeller 2 is shaped to conform to the shape of the bottom wall 1b of the agitating vessel 1.

Thus, in this embodiment, since the lower end portion 21a2 of the agitating impeller 2 is shaped to conform to the shape of the bottom wall 1b, the agitating impeller 2 can be disposed close to the bottom wall 1b of the agitating vessel 1. As such, using the agitating impeller 2 of this embodiment, occurrence of residues of a substance on the bottom wall 1b of the agitating vessel 1 can be prevented. In addition, since the blade section is formed to have the height h greater than that of the conventional art, the agitation performance can be improved even for large-volume agitation, in comparison to the conventional case.

As described above, in the agitator of this embodiment, all configuration elements such as the agitating vessel 1 and the agitating impeller 2 that contact the substance in the agitating vessel 1 are formed not to include protrudent portions, angular portions, and the like. The thus-formed configuration elements are glass-lined. As such, in this embodiment, separation of the glass-lined layer after the glass-lining can be prevented. Consequently, the agitator having a high sanitary property as well as a high corrosion resistance can be obtained.

In this embodiment, configuration elements, such as the agitating vessel 1 and the agitating impeller 2, are formed by exerting utmost efforts not to use main-unit flanges, bolts, and the like. The thus-formed elements, such as the agitating vessel 1 and agitating impeller 2, are used to configure the agitator. In addition, this embodiment uses a selected agitating impeller 2 dimensionally balanced and having high agitation performance for a substance in a wide volume range of from a small volume to a large volume. The agitating impeller 2 is selected from agitating impellers 2 mountable by insertion through the impeller-mounting opening 5 provided to the agitating vessel 1. More specifically, the agitator of this embodiment is configured using the agitating impeller 2 including the blade section 21 dimensionally set to the range in which the ratio (h/d) of the height h and span d of the blade section 21 is 0.25 or higher (more preferably, in a range of from 0.25 to 0.75).

Thus, this embodiment is configured by avoiding the main-unit flanges and the like and by exerting utmost efforts not to use separable portions. As such, portions where liquid residues of, for example, a substance, can occur can be reduced. Thereby, operations such as cleaning can easily be performed; and concurrently, the agitator with an improved sanitary property can be obtained. In addition, according to this embodiment, the setting range of the above-described h/d ratio was obtained that enables an agitating impeller 2 having high agitation performance to be selected from agitating impellers 2 mountable through the impeller-mounting opening 5 of the agitating vessel 1. Thereby, the agitator concurrently having both the high sanitary property and high agitation performance can be obtained.

According to this embodiment, the agitator is configured to include the closed-type agitating vessel 1 and the agitating impeller 2 mountable by insertion through the impeller-mounting opening 5 of the upper wall 1a of the agitating vessel 1. As such, the agitator can be fabricated without performing complicated operations such as mounting/dismounting of main-unit flanges. For example, when fabricating an agitator using an open-type agitating vessel, a number of fixing elements such as stays, bolts, and nuts need to be used for mounting/dismounting main-unit flanges; and much time is required for preparing these fixing elements and the like and for fixing/unfixing them. As described, however, according to this embodiment, the closed-type agitating vessel 1 is used for purposes, such as improvement in sanitary property. Concurrently, the agitating impeller 2 having a high sanitary property as well as a high agitation performance is selected under the condition of enabling the agitating impeller 2 to be mounted through the impeller-mounting opening 5. Accordingly, the agitator can be configured by easily mounting the agitating vessel 1 into the agitating vessel 1 without performing the complicated operations, such as mounting/dismounting of the elements such as the main-unit flanges and the like in a relatively short period of time.

The present invention is not limited by the details described in this embodiment, but various other modifications or changes may be imparted thereto without departing from the scope of the invention. For example, the configuration elements, such as the agitating impeller, the baffle section, and the interior of the agitating vessel need not indispensably glass-lined. These configuration elements may instead be formed of stainless steels. In a configuration using the stainless steels, angular portions of the agitating impeller, the baffle section, and the agitator need not indispensably chamfered.

While this embodiment has been described with reference to the example configuration in which the blade section is configured using two blade-forming sections, the present invention is not limited to this configuration. For example, three or more blade-forming sections may be used to configure a corresponding agitating impeller. Various advantages equivalent to those described in this embodiment can be obtained in principle by determining the above-described h/d ratio within the setting range according to one of the equations (Eq. 2) and (Eq. 3). However, when configuring an agitating impeller by using four or more blade-forming sections, the individual blade-forming sections should not be provided to the agitation shaft at equal angular pitches (for example, at 90 degrees (pitches) when using four blade-forming sections). In this case, the individual blade-forming sections should be provided to the agitation shaft by appropriately tuning the angle between the individual blade-forming sections to enable the agitating impeller to be inserted through the impeller-mounting opening.

Furthermore, while this embodiment has been described with reference to the example configuration including the single baffle section 3. However, the present invention is not limited to the configuration, and two or more baffle sections may be provided depending on the necessity. With an agitator including the two or more baffle section thus provided, the agitation performance can further be improved for agitation of a large volume of a substance.

This specification is by no means intended to restrict the present invention to the preferred embodiments set forth therein. Various modifications to the agitating impeller, agitator using the same and agitating method, as described herein, may be made by those skilled in the art without departing from the spirit and scope of the present invention as defined in the appended claims.

**Claims**

1. An agitating impeller comprising:

   an agitation shaft; and
   a blade section including a plurality of blade-forming sections mounted to the agitation shaft; wherein
   the blade-forming sections are each formed of a planar member,
   an outer end portion of each of the blade-forming sections is bent backward with respect to the direction of rotation of the agitating impeller,
   a lower end portion of each of the blade-forming sections is formed to conform to the shape of a bottom wall of an agitating vessel in which the agitating impeller is provided,
   all angular portions of the individual blade-forming sections are chamfered, and
   the agitation shaft and the blade section are subjected to glass-lining.

2. The agitating impeller according to claim 1, wherein
   a span d and a height h of the blade section have a relationship satisfying the following equation:

$$h/d \geq 0.25.$$

3. The agitating impeller according to claim 1, wherein
   a span d and a height h of the blade section have a relationship satisfying the following equation:

$$h/d = 0.25 \text{ to } 0.75.$$

4. The agitating impeller according to claim 1, wherein
   the agitating vessel is formed in a vertical cylindrical shape,
   an impeller-mounting opening is provided on an upper wall of the agitating vessel,
   an inner diameter D of the agitating vessel and a bore T of the impeller-mounting opening have a relationship satisfying the following equation:

$$T = 0.3D \text{ to } 0.4D,$$

   and
   the agitating impeller can be mounted by insertion through the impeller-mounting opening into the agitating vessel.

5. The agitating impeller according to claim 4, wherein
   a span d and a height h of the blade section have a relationship satisfying the following equation:

$$h/d \geq 0.25.$$

**6.** The agitating impeller according to claim 4, wherein
a span d and a height h of the blade section have a relationship satisfying the following equation:

$$h/d = 0.25 \text{ to } 0.75.$$

**7.** An agitating impeller capable of agitating a substance in a volume equivalent to 3 to 110% of a capacity of an agitating vessel, comprising:

an agitation shaft; and
a blade section including a plurality of blade-forming sections mounted to the agitation shaft, wherein
the blade-forming sections are each formed of a planar member,
an outer end portion of each of the blade-forming sections is bent backward with respect to the direction of rotation of the agitating impeller, and
a lower end portion of each of the blade-forming sections is formed to conform to the shape of a bottom wall of the agitating vessel in which the agitating impeller is provided.

**8.** The agitating impeller according to claim 7, wherein
a span d and a height h of the blade section have a relationship satisfying the following equation:

$$h/d \geq 0.25.$$

**9.** The agitating impeller according to claim 8, wherein the agitating vessel is formed in a vertical cylindrical shape,
an impeller-mounting opening is provided on an upper wall of the agitating vessel,
all angular portions of the individual blade-forming sections are chamfered, the agitation shaft and the blade section are subjected to glass-lining, an inner diameter D of the agitating vessel and a bore T of the impeller mounting opening have a relationship satisfying the following equation:

$$T = 0.3D \text{ to } 0.4D, \text{ and}$$

the agitating impeller can be mounted by insertion through the impeller-mounting opening into the agitating vessel.

**10.** The agitating impeller according to claim 7, wherein
a span d and a height h of the blade section have a relationship satisfying the following equation:

$$h/d = 0.25 \text{ to } 0.75.$$

**11.** The agitating impeller according to claim 10, wherein the agitating vessel is formed in a vertical cylindrical shape,
an impeller-mounting opening is provided on an upper wall of the agitating vessel,
all angular portions of the individual blade-forming sections are chamfered, the agitation shaft and the blade section are subjected to glass-lining, an inner diameter D of the agitating vessel and a bore T of the impeller mounting opening have a relationship satisfying the following equation:

$$T = 0.3D \text{ to } 0.4D, \text{ and}$$

the agitating impeller can be mounted by insertion through the impeller-mounting opening into the agitating vessel.

**12.** An agitator comprising:

an agitating vessel in a vertical cylindrical shape;
an agitating impeller provided in the agitating vessel so as to be rotationally driven; and
a baffle section fixedly disposed in the agitating vessel, wherein
the baffle section is provided above the agitating impeller such that a lower end portion of the baffle section and an upper end portion of the agitating impeller do not overlap with each other in a vertical direction in the agitating vessel, and
a lower end portion of the agitating impeller is formed to conform to the shape of a bottom wall of the agitating vessel.

**13.** The agitator according to claim 12, wherein
a span d and a height h of the blade section have a relationship satisfying the following equation:

$$h/d \geq 0.25.$$

**14.** The agitator according to claim 13, wherein
an impeller-mounting opening is provided in the upper wall of the agitating vessel,
an inner diameter D of the agitating vessel and a bore T of the impeller-mounting opening have a relationship satisfying the following equation:

$$T = 0.3D \text{ to } 0.4D,$$

the agitating impeller can be mounted by insertion through the impeller-mounting opening into the agitating vessel,
all angular portions of the individual blade-forming sections are chamfered, and
an inner surface of the agitating vessel, an outer surface of the agitating impeller and an outer surface of the baffle section are subjected to glass-lining.

**15.** The agitator according to claim 12, wherein a span d and a height h of the blade section have a relationship satisfying the following equation:

$$h/d = 0.25 \text{ to } 0.75.$$

**16.** The agitator according to claim 15, wherein
an impeller-mounting opening is provided in the upper wall of the agitating vessel,
an inner diameter D of the agitating vessel and a bore T of the impeller-mounting opening have a relationship satisfying the following equation:

$$T = 0.3D \text{ to } 0.4,$$

the agitating impeller can be mounted by insertion through the impeller-mounting opening into the agitating vessel,
all angular portions of the individual blade-forming sections are chamfered, and
an inner surface of the agitating vessel, an outer surface of the agitating impeller and an outer surface of the baffle section are subjected to glass-lining.

**17.** The agitator according to claim 12, wherein
the agitating impeller includes: an agitation shaft which is rotationally driven by a driving section provided outside of the agitating vessel; and a blade section including a plurality of blade-forming sections mounted to the agitation shaft,
the blade-forming sections are each formed of a planar member,
an outer end portion of each of the blade-forming sections is bent backward with respect to the direction of rotation of the agitating impeller, and a lower end portion of each of the blade-forming sections is formed to conform to the shape of a bottom wall of the agitating vessel.

**18.** The agitator according to claim 17, wherein
a span d and a height h of the blade section have a relationship satisfying the following equation:

$$h/d \geq 0.25.$$

**19.** The agitator according to claim 18, wherein

an impeller-mounting opening is provided in the upper wall of the agitating vessel,
an inner diameter D of the agitating vessel and a bore T of the impeller-mounting opening have a relationship satisfying the following equation:

$$T = 0.3D \text{ to } 0.4D,$$

the agitating impeller can be mounted by insertion through the impeller-mounting opening into the agitating vessel,
all angular portions of the individual blade-forming sections are chamfered, and
an inner surface of the agitating vessel, an outer surface of the agitating impeller and an outer surface of the baffle section are subjected to glass-lining.

**20.** The agitator according to claim 17, wherein
a span d and a height h of the blade section have a relationship satisfying the following equation:

$$h/d = 0.25 \text{ to } 0.75.$$

**21.** The agitator according to claim 20, wherein
an impeller-mounting opening is provided in the upper wall of the agitating vessel,
an inner diameter D of the agitating vessel and a bore T of the impeller-mounting opening have a relationship satisfying the following equation:

$$T = 0.3D \text{ to } 0.4D,$$

the agitating impeller can be mounted by insertion through the impeller-mounting opening into the agitating vessel,
all angular portions of the individual blade-forming sections are chamfered, and
an inner surface of the agitating vessel, an outer surface of the agitating impeller and an outer surface of the baffle section are subjected to glass-lining.

**22.** An agitator comprising:

an agitating vessel in a vertical cylindrical shape;
an agitating impeller provided in the agitating vessel so as to be rotationally driven; and
a baffle section fixedly disposed in the agitating vessel, wherein
the baffle section is provided above the agitating impeller such that a lower end portion of the baffle section and an upper end portion of the agitating impeller do not overlap with each other in a vertical direction in the agitating vessel,
the agitating impeller includes: an agitation shaft which is rotationally driven by a driving section provided outside of the agitating vessel; and a blade section including a plurality of blade-forming sections mounted to the agitation shaft,
the blade-forming sections are each formed of a planar member,
an outer end portion of each of the blade-forming sections is bent backward with respect to the direction of rotation of the agitating impeller,
a lower end portion of each of the blade-forming sections is formed to conform to the shape of a bottom wall of the agitating vessel,
the agitating impeller can be mounted by insertion through the impeller mounting opening into the agitating vessel, and
an inner diameter D of the agitating vessel, a bore T of the impeller-mounting opening, a span d of the blade section and a height h of the blade section have relationships satisfying the following equations:

$$T = 0.3D \text{ to } 0.4D;$$

$$d = 0.4D \text{ to } 0.67D;$$

and

$$h/d \geq 0.25.$$

**23.** The agitator according to claim 22, wherein
the bore T of the impeller-mounting opening and the span d of the blade section have a relationship satisfying the following equation:

$$d = 1.4T \text{ to } 1.6T.$$

**24.** The agitator according to claim 23, wherein
all angular portions of the individual blade-forming sections are chamfered, and
an inner surface of the agitating vessel, an outer surface of the agitating impeller and an outer surface of the baffle section are subjected to glass-lining.

**25.** A method of agitating a substance having an arbitrary volume in a range from approximately 3% or more to approximately 110% or less of a capacity of the agitating vessel by using the agitating impeller of claim 1, while agitating the substance in a volume-varying state where a capacity of the substance is increased or reduced in volume within the range.

# F I G . 1

# F I G . 2(a)

# F I G . 2(b)

# F I G . 3 (a)

# F I G . 3 (b)

# F I G . 3 (c)

FIG. 4

EP 1 258 289 A2

# FIG. 5

EP 1 258 289 A2

# F I G . 6
# (PRIOR ART)